# DEMANDE DE BREVET EUROPEEN

(11) **EP 1 359 657 A1**
(43) Date de publication de la demande: **05.11.2003**
(21) Numéro de dépôt: 03009137.5
(22) Date de dépôt: 22.04.2003
(51) Int. Cl.: H02K 1/27

(54) **Machine électrique dont le rotor est spécialement adapté aux hautes vitesses**

(30) Priorité: 29.04.2002 FR 0205478
(71) Demandeur: Conception et Développement Michelin S.A., 1762 Givisiez (CH)
(72) Inventeur: Laurent, Daniel, 1723 Marly (CH); Pegoraro, Giancarlo, 1806 Saint-Legier (CH)
(74) Mandataire: Bauvir, Jacques

(57) **Abrégé**

Machine électrique tournante, dont le rotor (1) comprend un arbre (2) réalisé en matériau amagnétique, une pluralité de pièces polaires (30) réalisées en matière magnétique, entourant l'arbre, des aimants permanents (4) immobilisés dans des logements (40) par une cale (51) coopérant avec les pièces polaires.

## Description

L'invention se rapporte aux machines électriques tournantes dont le rotor comporte des aimants permanents. Plus précisément, l'invention concerne les machines dans lesquelles les aimants sont disposés dans des évidements du rotor. On désigne communément les machines électriques dont il s'agit par l'expression « à aimants enterrés ». Ce principe d'agencement du rotor est largement appliqué pour les machines synchrones auto pilotées à concentration de flux.

Le dimensionnement d'une machine électrique tournante dépend de son couple nominal. Plus le couple qu'un moteur est capable de délivrer est élevé, plus le moteur électrique est volumineux, toutes autres choses égales par ailleurs. Il existe pourtant des applications pour lesquelles il est désirable d'atteindre à la fois des puissances importantes et une grande compacité du moteur. Pour donner simplement un exemple concret, lorsque l'on souhaite implanter des moteurs électriques de traction dans les roues de véhicules automobiles, il est souhaitable de pouvoir développer des puissances valant au moins 10 kW par moteur, et même la plupart du temps au moins 25 ou 30 kW par moteur, pour un poids le plus faible possible afin de ne pas trop alourdir les masses non suspendues. Il est également désirable que l'encombrement soit aussi très réduit, dépassant le moins possible le volume intérieur de la roue pour ne pas interférer avec les éléments du véhicule lors des débattements de suspension et lors d'autres types de mouvement de la roue par rapport à la caisse du véhicule.

Ces deux impératifs (puissance élevée, encombrement et poids faibles) rendent très problématique l'implantation de moteurs électriques de traction dans les roues de véhicules de tourisme, sauf à améliorer radicalement le rapport poids/puissance des machines électriques actuellement disponibles sur le marché.

Le choix d'une vitesse élevée pour un moteur électrique lors de la conception du moteur est une solution permettant, à puissance donnée, de diminuer le couple, donc l'encombrement. Autrement dit, pour une puissance nominale du moteur donnée, plus grande est sa vitesse de rotation nominale, plus faible sera son encombrement. Mais l'élévation de la vitesse de rotation d'une machine électrique tournante pose de nombreux problèmes de tenue mécanique, surtout ardus si l'on souhaite contenir autant que possible le poids et l'encombrement de ladite machine électrique tournante.

Une conception spécifique pour atteindre de grandes vitesses de rotation a déjà été proposée dans la demande de brevet EP 1001507. Les vitesses visées dans cette demande de brevet sont de l'ordre de 12000 t/min, en proposant pour cela un agencement particulier de l'ensemble constitué par un arbre monobloc amagnétique polygonal et des pièces polaires judicieusement disposées autour de cet arbre.

Si l'on augmente encore la vitesse de rotation, se posent des problèmes de tenue mécanique des aimants. L'extrémité radialement extérieure de ceux-ci risque de se désagréger. Des morceaux d'aimants risquent d'être centrifugés, ce qui semble cantonner les machines à rotor intérieur aux niveaux de vitesse de rotation indiqués ci-dessus.

L'objectif de l'invention est de proposer une construction de machine électrique tournante, à rotor intérieur et stator extérieur, qui permette d'atteindre des vitesses de rotation bien plus élevées, sans rencontrer de problème de centrifugation des aimants au rotor.

L'invention propose une machine électrique tournante, comprenant un stator extérieur et un rotor intérieur, avec un entrefer entre le rotor et le stator, le rotor comprenant :
- un arbre monté par des paliers sur le stator, au moins l'enveloppe extérieure de l'arbre étant réalisée en matériau amagnétique, lesdits paliers définissant l'axe de rotation dudit arbre,
- une pluralité de pièces polaires réalisées en matière magnétique, entourant l'arbre, les pièces polaires ayant un bord radialement intérieur en contact avec la surface de l'arbre et un bord radialement extérieur adjacent à l'entrefer, les pièces polaires délimitant entre elles des logements,
- un flasque latéral de chaque côté des pièces polaires, axialement, l'arbre traversant le flasque latéral par un évidement central aménagé sur ledit flasque latéral,
- au moins un tirant par pièce polaire, le tirant enserrant chaque pièce polaire entre les flasques latéraux,
- une cale coopérant avec des épaulements disposés sur chacune des pièces polaires adjacentes, de façon à bloquer tout déplacement des aimants vers les plus grands rayons,
- des aimants permanents installés dans lesdits logements.

Ainsi, le logement de chaque aimant est fermé radialement du côté extérieur; cela permet d'atteindre des vitesses de rotation beaucoup plus élevées, sans dommage pour les aimants. Rappelons que les pièces polaires sont couramment formées par un empilage dans la direction axiale de tôles ferromagnétiques de base découpées à la forme voulue. Toutes les tôles sont disposées sensiblement perpendiculairement à l'axe de l'arbre.

L'invention sera mieux comprise grâce à la suite de la description, qui s'appuie sur les figures suivantes :
- la figure 1 est une perspective montrant le rotor d'une machine selon l'invention ;
- la figure 2 est une coupe montrant le rotor et le stator d'une machine selon l'invention, le plan de coupe passant par l'axe de rotation de la machine et par des logements d'aimant ;
- la figure 3 est une coupe montrant le rotor d'une machine selon l'invention, le plan de coupe étant perpendiculaire à son axe de rotation, un aimant étant omis ;
- la figure 4 montre en détail une cale d'une machine selon l'invention ;
- la figure 5 montre une première variante de la cale ;
- la figure 6 montre une deuxième variante de la cale ;
- la figure 7 montre une troisième variante de la cale.

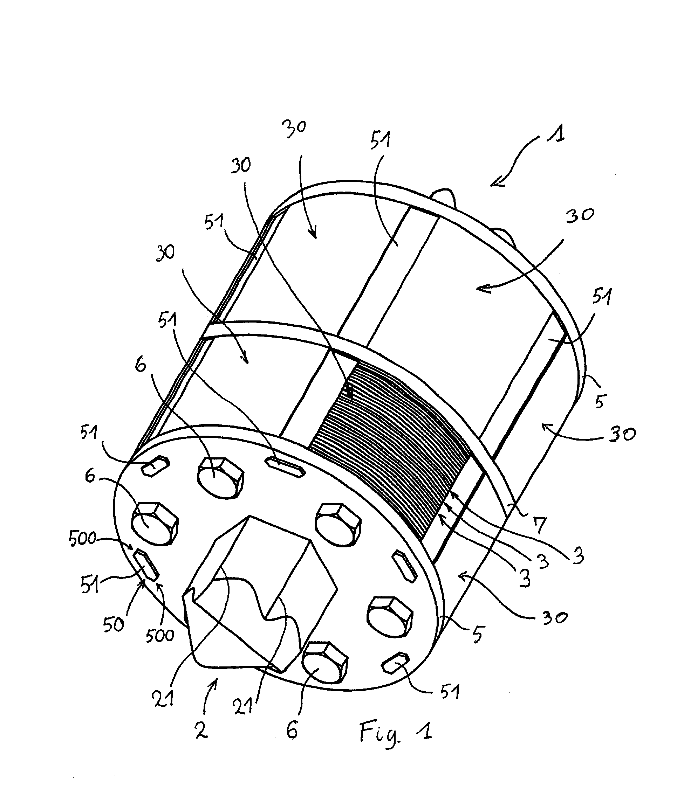

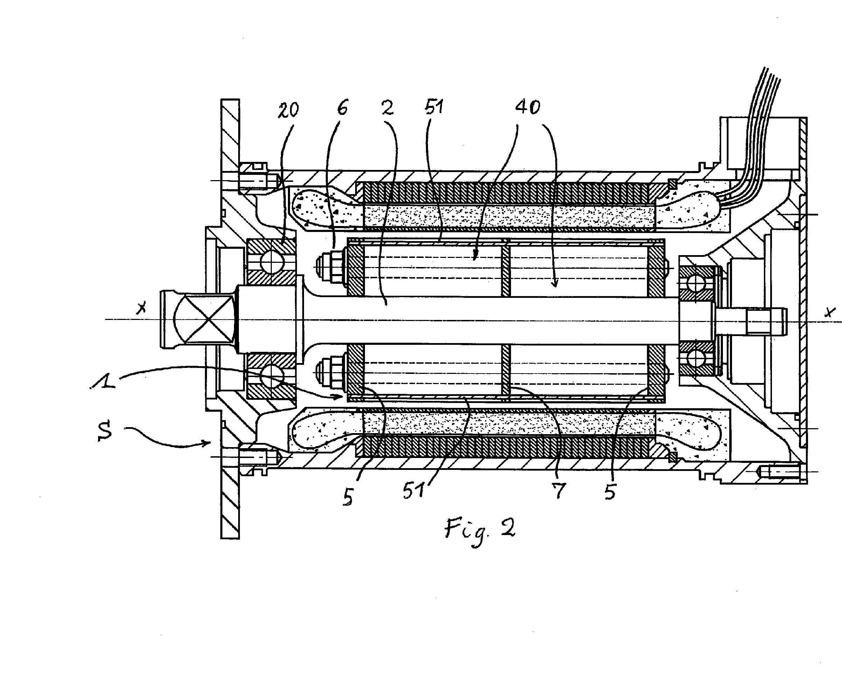

Aux figures 1 à 3, on a représenté une machine hexa-polaire comportant un stator S (figure 2 uniquement), un rotor 1, ayant un arbre 2 reposant sur des paliers 20. On voit un empilage de tôles 3 ferro-magnétiques formant six pièces polaires 30. Chaque tôle 3 est sensiblement perpendiculaire à l'axe de l'arbre. Notons simplement au passage que l'invention est aussi utile dans le cas de pièces polaires massives (non feuilletées). De part et d'autre de l'arbre 2, axialement, on voit un flasque latéral 5 (de préférence en matériau amagnétique), situé de chaque côté des pièces polaires 30. On voit également un flasque intermédiaire 7 optionnel (de préférence en matériau amagnétique). Chaque flasque latéral 5 et le cas échéant chaque flasque intermédiaire 7 comporte un évidement central. Dans l'exemple non limitatif décrit ici, la forme de l'évidement central est polygonale. La forme de l'évidemment est ajustée à celle de l'arbre 2. Pour chacune des pièces polaires 30, un tirant 6 traverse l'empilage de tôles 3, le cas échéant le ou les flasques intermédiaires, et permet d'enserrer le tout entre les flasques latéraux 5.

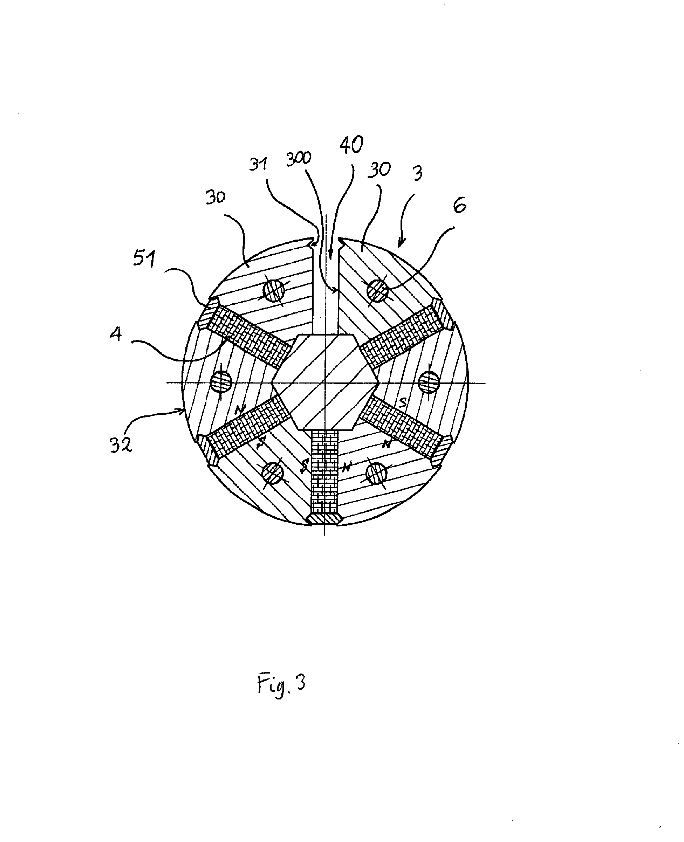

On voit des aimants permanents 4 parallélépipédiques disposés dans les logements 40 entre les pièces polaires 30. A la figure 3, un aimant est ôté pour bien faire apparaître un logement 40. A la figure 2, les logements 40 par lesquels passe le plan de coupe sont vide de tout aimant. Les pièces polaires 30 comportent des faces longitudinales 300 orientées parallèlement à l'axe de rotation du rotor. Ces faces longitudinales 300 délimitent les logements recevant les aimants 4. Le bord radialement extérieur 32 de chaque tôle 3 dessine un arc de cercle centré sur l'axe du rotor. La section perpendiculaire à l'axe de rotation de l'arbre 2 présente une forme polygonale convexe. La forme polygonale convexe comporte des facettes planes 22 séparées par des arêtes 21. Les aimants 4 sont en contact direct sur chacune des facettes planes de l'arbre. Pour plus de détails, le lecteur est invité à consulter la demande de brevet EP 1001507 précitée, toutes les caractéristiques qui y sont décrites étant également utiles en combinaison avec la présente invention, dont l'intérêt ne se limite cependant pas à une telle combinaison.

Chacun des logements des aimants est fermé par une cale 51 (voir figures 1, 2 et 3). Deux cales 51 sont également représentées à la figure 2. On voit bien à la figure 1 que la cale 51 traverse des perçages 50 réalisés à la périphérie des flasques latéraux 5, en regard des logements contenant les aimants. Il en est de même sur le ou les flasques intermédiaires 7 éventuellement présents.

Par ailleurs, les faces longitudinales 300 des pièces polaires 30 comportent chacune une rainure 31 parallèle à l'axe du rotor, creusée dans chacune des faces longitudinales des pièces polaires, à un niveau radial proche du bord extérieur 32 de chaque pièce polaire 30, lesdites pièces polaires présentant par ailleurs une hauteur (radialement) légèrement supérieure à la hauteur des aimants 4. Chaque cale 51 prend ainsi appui sur deux rainures 31 disposées sur chacune des pièces polaires adjacentes. Les aimants 4 sont ainsi rendus mécaniquement solidaires des pièces polaires 30. La fonction essentielle de chaque rainure 31 est de former un épaulement pour s'opposer à la centrifugation des cales et par conséquent des aimants. Les pièces polaires sont elles-mêmes solidaires de l'arbre 2 grâce aux tirants et aux flasques latéraux et éventuellement intermédiaire(s). Le rotor supporte sans dommage des vitesses de rotations très élevées, très supérieures à 10000 t/min, à savoir des vitesses de l'ordre de 20000 t/min au moins.

La tenue à la centrifugation d'un tel montage s'avère si efficace que l'on peut même envisager de ne plus recourir au collage des aimants dans leurs logements, ce qui simplifie la réalisation du rotor. Ainsi, dans une réalisation particulière mais avantageuse de l'invention, le rotor est dépourvu de colle entre chaque aimant et les pièces adjacentes.

Chaque rainure 31 est alignée avec les extrémités circonférentielles 500 des perçages 50 réalisés dans les flasques latéraux 5. De même, chaque rainure 31 est alignée avec les extrémités circonférentielles (non visibles aux dessins) de perçages similaires réalisés dans le ou les éventuels flasques intermédiaires 7.

Au montage, on installe d'abord l'ensemble formé par les pièces polaires, les flasques latéraux, le ou les flasques intermédiaires éventuels et les tirants autour de l'arbre 2. Puis on insère les aimants 4 dans les logements en les faisant glisser radialement au travers de l'orifice extérieur de chaque logement, jusqu'à ce qu'ils soient en contact avec l'arbre 2. Enfin, on ferme les orifices extérieurs de chaque logement au moyen des cales : une extrémité 510 de chaque cale 51 peut être insérée dans un des perçages 50 d'un des flasques latéraux 5, puis on la fait glisser parallèlement à l'axe, jusqu'à ce que ladite extrémité soit insérée dans le perçage correspondant aménagé sur le flasque latéral opposé.

Bien entendu, les détails de réalisation donnés ci-dessus ne sont pas limitatifs. Il est évident que les perçages 50 ne sont pas obligatoires pour rendre chaque cale 51 mécaniquement solidaire des pièces polaires. En variante encore, on pourrait ne prévoir que des perçages non débouchants, qui reçoivent les cales et contribuent à leur maintien radialement. Il est tout aussi évident que le montage des cales, comme des autres pièces constitutives, pourrait être différent : par exemple, les cales pourraient être disposées sur chacun des aimants avant le montage des flasques latéraux. L'encastrement des cales sur les flasques latéraux offre une grande facilité de montage, mais cette disposition n'est cependant pas impérative pour la bonne tenue des aimants ; il suffit pour cela que les cales coopèrent avec les pièces polaires.

Par ailleurs, il faut éviter un court-circuit magnétique qui empêcherait tout ou partie du flux magnétique créé par les aimants au rotor de circuler au stator et de coopérer avec le flux créé par les courants statoriques. Une solution est que chaque cale soit réalisée en matériau amagnétique. On peut choisir le matériau amagnétique dans le groupe constitué par les matières composites, les alliages d'aluminium, les aciers amagnétiques, les céramiques et le titane. En outre, il faut éviter l'apparition de courants de Foucault ou limiter leur importance, afin de ne pas dégrader le rendement de la machine. Une solution est que chaque cale soit réalisée en matériau non conducteur de l'électricité. Par exemple, on utilise une matière composite de résistance mécanique suffisante pour supporter les contraintes importantes apparaissant lors de rotations à vitesse élevée.

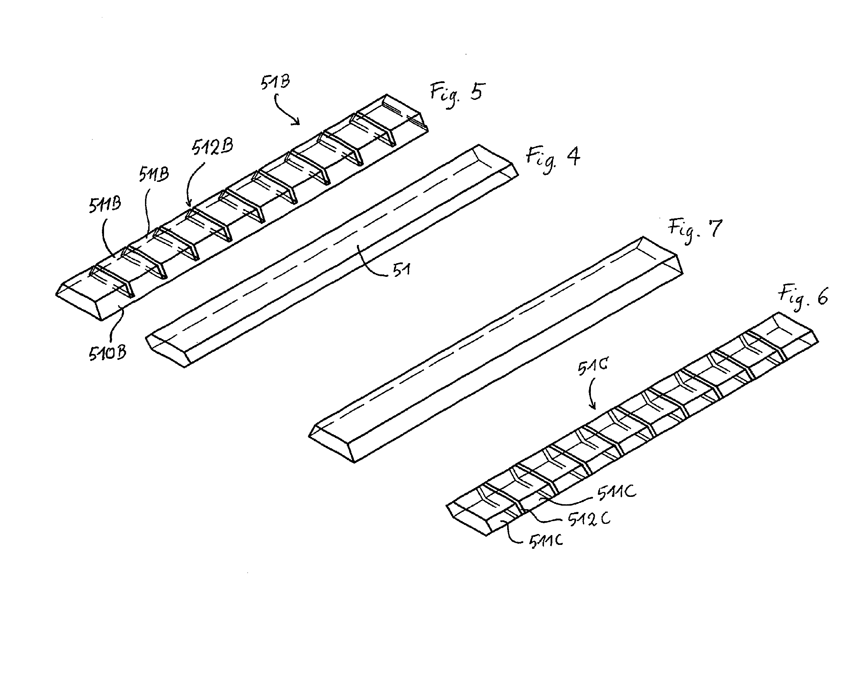

Une telle cale est par exemple montrée à la figure 4. La figure 7 montre un autre exemple d'une telle cale, dont la forme de la section est trapézoïdale, ceci pour bien faire comprendre que la forme de la section de cale apparaissant aux figures 1, 3 et 4 n'est pas limitative.

Dans les variantes de la cale illustrées aux figures 5 et 6, on propose un autre arrangement qui permet l'utilisation pour les cales de matériaux amagnétiques et conducteurs de l'électricité. La cale 51B de la figure 5 a la forme d'une base mince et allongée 510B parallèlement à l'axe, surmontée d'une pluralité de blocs 511B adjacents longitudinalement, séparés par des fentes 512B. Les blocs 511B ne sont donc pas en contact les uns contre les autres. Bien que le matériau soit conducteur, de par la très faible épaisseur de la base, les courants de Foucault restent très minimes, sans conséquence notable sur le rendement de la machine. Il y a avantage à ce que la dimension longitudinale des blocs 511B soit aussi faible que possible. L'épaisseur de la cale dans le sens radial est dimensionnée pour être suffisante pour supporter les contraintes mécaniques en service.

La variante de réalisation montrée à la figure 6 est une cale 51C comportant une pluralité d'éléments 511C adjacents et alignés longitudinalement, réalisés en matériau conducteur de l'électricité, collés les uns sur les autres au moyen d'une matière 512C non conductrice de l'électricité. Il y a avantage à ce que la dimension longitudinale des éléments 511C soit aussi faible que possible. De la sorte, les courants de Foucault restent également très minimes.

## Revendications

1. Machine électrique tournante, comprenant un stator extérieur (S) et un rotor intérieur (1), avec un entrefer entre le rotor et le stator, le rotor comprenant :
• un arbre (2) monté par des paliers (20) sur le stator, au moins l'enveloppe extérieure de l'arbre étant réalisée en matériau amagnétique, lesdits paliers définissant l'axe de rotation dudit arbre,
• une pluralité de pièces polaires (30) réalisées en matière magnétique, entourant l'arbre, les pièces polaires ayant un bord radialement intérieur en contact avec la surface de l'arbre et un bord radialement extérieur adjacent à l'entrefer, les pièces polaires délimitant entre elles des logements,
• un flasque latéral (5) de chaque côté des pièces polaires, axialement, l'arbre (2) traversant le flasque latéral (5) par un évidement central aménagé sur ledit flasque latéral,
• au moins un tirant (6) par pièce polaire, le tirant enserrant chaque pièce polaire entre les flasques latéraux,
• une cale (51, 51B, 51C) coopérant avec des épaulements disposés sur chacune des pièces polaires adjacentes, de façon à bloquer tout déplacement des aimants vers les plus grands rayons,
• des aimants permanents (4) installés dans lesdits logements.

2. Machine selon la revendication 1 dans laquelle chaque épaulement est formé au moyen d'une rainure (31) parallèle à l'axe du rotor, creusée dans chacune des faces longitudinales des pièces polaires, à un niveau radial proche du bord extérieur de chaque pièce polaire.

3. Machine selon la revendication 1 ou 2 dans laquelle chaque cale est réalisée en matériau amagnétique.

4. Machine selon la revendication 3 dans laquelle le matériau amagnétique est choisi dans le groupe constitué par les matières composites, les alliages d'aluminium, les aciers amagnétiques, les céramiques et le titane.

5. Machine selon la revendication 1 ou 2 dans laquelle chaque cale est en matériau conducteur de l'électricité et consiste en une base (510B) mince et allongée parallèlement à l'axe, surmontée d'une pluralité de blocs (511B) adjacents longitudinalement, non en contact les uns contre les autres.

6. Machine selon la revendication 1 ou 2 dans laquelle chaque cale est constituée d'une pluralité de blocs adjacents et alignés longitudinalement, réalisés en matériau conducteur de l'électricité, collés les uns contre les autres au moyen d'une matière non conductrice de l'électricité.

7. Machine selon l'une des revendications 1 à 6 dans laquelle le rotor est dépourvu de colle entre chaque aimant et les pièces adjacentes.

8. Machine selon l'une des revendications 1 à 7 dans laquelle l'arbre, vu en section perpendiculaire à l'axe de rotation, forme un polygone convexe comportant des facettes planes séparées par des arêtes (21).

9. Machine selon l'une des revendications 1 à 8 dans laquelle chaque pièce polaire comporte un empilage de tôles ferro-magnétiques (3), chaque tôle étant sensiblement perpendiculaire à l'axe de l'arbre.

10. Machine selon l'une des revendications 1 à 9, dans laquelle les aimants permanents (4) sont en contact direct avec l'arbre (2).
